# EUROPÄISCHE PATENTANMELDUNG

(11) **EP 3 069 928 A1**
(43) Veröffentlichungstag der Anmeldung: **21.09.2016**
(21) Anmeldenummer: 16159350.4
(22) Anmeldetag: 09.03.2016
(51) Int. Cl.: B60P 3/04

(54) **TRANSPORTFAHRZEUG FÜR REITTIERE, INSBESONDERE PFERDE**

(30) Priorität: 13.03.2015 DE 202015101320 U
(71) Anmelder: Bücker Trailer GmbH, 48282 Emsdetten (DE)
(72) Erfinder: Bücker, Sebastian, 48432 Rheine (DE)
(74) Vertreter: Einsel, Martin

(57) **Zusammenfassung**

Ein Transportfahrzeug für Reittiere, insbesondere für Pferde, besitzt ein Fahrgestell (12) und einen Aufbau, der eine Bodenplatte (20), von der Bodenplatte (20) aufragende Seitenwände (30) und eine Heckklappe (40) aufweist. Die Heckklappe (40) ist beweglich angebracht und zwischen einer geschlossenen Position, in der die Heckklappe (40) die Position einer hinteren Seitenwand übernimmt, und einer geöffneten Position schwenkbar, in der die Heckklappe (40) die Position einer Rampe übernimmt, über welche ein Reittier in und aus dem Transportfahrzeug geführt werden kann. Die Bodenplatte (20), die Seitenwände (30) und die Heckklappe (40) sind jeweils aus Kunststoff aufgebaut. Die Bodenplatte (20) und / oder die Heckklappe (40) weisen einen Schichtaufbau auf. Das Kernmaterial (23, 44) der Bodenplatte (20) beziehungsweise der Heckklappe (40) ist ein mit dreidimensionalen Glasbrücken versehener Schaum aus Kunststoff.

## Beschreibung

Die Erfindung betrifft ein Transportfahrzeug für Reittiere, insbesondere für Pferde, mit einem Fahrgestell und mit einem Aufbau, der eine Bodenplatte, von der Bodenplatte aufragende Seitenwände und eine Heckklappe aufweist, wobei die Heckklappe beweglich angebracht ist und zwischen einer geschlossenen Position, in der die Heckklappe die Position einer hinteren Seitenwand übernimmt, und einer geöffneten Position schwenkbar ist, in der die Heckklappe die Position einer Rampe übernimmt, über welche ein Reittier in und aus dem Transportfahrzeug geführt werden kann, wobei die Bodenplatte, die Seitenwände und die Heckklappe jeweils aus Kunststoff aufgebaut sind.

Reittiere, insbesondere Pferde müssen häufig mit Fahrzeugen über größere Strecken transportiert werden. Dies stellt relativ hohe Anforderungen an die dabei zu verwendenden Transportfahrzeuge. Die Reittiere sollen am Zielort mit möglichst wenig körperlichen und psychischen Belastungen ankommen. Die Transportfahrzeuge selbst sollen nach Möglichkeit bei dem Transport auch keinen Schaden nehmen. Schließlich ist auch auf den Aspekt der Wirtschaftlichkeit zu achten.

Herkömmliche Transportfahrzeuge für Reittiere, auch als Pferdeanhänger bezeichnet, werden durch ein motorisiertes Zugfahrzeug gezogen, an welches sie lösbar angehängt werden können, beispielsweise mittels einer Anhängerkupplung. Die Pferdeanhänger besitzen ein oder zwei Achsen, die zweckmäßig unter dem Schwerpunkt des mit Pferden beladenen Transportfahrzeugs angeordnet werden.

Auf einem entsprechenden Fahrgestell befinden sich Aufbauten, die insbesondere eine möglichst belastungsfreie Befestigung der Pferde während des Transports sicher stellen und das Pferd oder andere Reittier während des Transports von äußeren Einflüssen frei halten, also insbesondere von Wind und Fahrtwind sowie Regen und anderen Niederschlägen.

Die Aufbauten besitzen eine Bodenplatte, auf der das oder die Reittiere stehen. Dabei wird häufig auf die Bodenplatte noch eine Gummimatte gelegt, um Stöße während des Transports von unten leicht abfedern zu können und eine direkte Kraftübertragung über die Bodenplatte in die Pferdehufe und umgekehrt zu vermeiden.

Von der Bodenplatte ragen dann Seitenwände nach oben auf. Meist ist heckseitig eine Heckklappe vorgesehen, um das Pferd beziehungsweise Reittier in und aus dem Transportfahrzeug herausführen zu können.

Herkömmlich wird für die Aufbauten insbesondere Holz eingesetzt. Holz hat aber den eindeutigen Nachteil, Feuchtigkeit aufzunehmen und im Laufe der Zeit zu verrotten. Dabei ist insbesondere zu berücksichtigen, dass die Aufbauten während des Transports auch Verwindungen, Krafteinflüssen und anderen Belastungen ausgesetzt sind, die eine materielle Zersetzung des Holzes fördern. Die Lebensdauer derartiger Aufbauten ist daher begrenzt und darüber hinaus kommt es auch während der Lebensdauer dazu, dass durch Zerfall, Zersplittern oder dergleichen Gefährdungen für die transportierten Reittiere eintreten können.

Selbst dann, wenn man den Bodenbereich eines Pferdeanhängers mit massiven Holzbohlen ausstattet, treten diese Nachteile ein. Der Grund liegt darin, dass Holzbohlen eine erhebliche Kapillarwirkung besitzen und damit Feuchtigkeit doch von den Endseiten oder auch von leicht beschädigten Stellen her schnell eindringt. Dies führt dann auch aufgrund der zusätzlichen Belastungen zu einem schnellen Verrotten und wie die Praxis zeigt sogar dazu, dass ein entsprechendes Transportfahrzeug nach fünf Jahren unbrauchbar ist und nicht mehr weiter verwendet werden kann, da der Boden schon zu stark zerstört ist.

Vor längerer Zeit ist daher bereits der Vorschlag gemacht worden, den Aufbau aus Holz durch einen vollständigen Aufbau aus Polyester zu ersetzen. Derartige Aufbauten haben sich jedoch als zu labil herausgestellt.

Aus der DE 10 2005 006 844 A1 und der DE 20 2005 002 422 U1 sind Pferdetransporter bekannt, bei denen die Aufbauten durch eine Kabinenhülle gebildet wird, deren Wandung aus einem mehrlagigen Sandwichmaterial mit einem Strukturkern aus Kunststoff oder Leichtmetall in Form eines Schaum-, Waben- oder Stegmaterials besteht. Dadurch soll die Stabilität verbessert werden und die Verschleißanfälligkeit reduziert werden.

Diese Lösung hat sich in der Praxis aber nicht durchgesetzt. Wie sich gezeigt hat, sind insbesondere die Belastungen sehr hoch, wenn das Reittier, insbesondere also ein Pferd, mit einem Huf auf den Boden des Pferdetransporters aufstampft oder nach hinten ausschlägt. Man muss dabei berücksichtigen, dass ein Pferd eine Masse von etwa 700 kg besitzt und diese Masse über vier nahezu punktförmige oder jedenfalls sehr kleinflächige Bereiche an den Hufen auf den Boden als Gewichtskraft übertragen werden beziehungsweise in noch höherer Stärke als Kraft pro Fläche beim Ausschlagen auf die Heckklappe des Transportfahrzeugs.

Wie sich gezeigt hat, führt dies dazu, dass selbst bei einem Aufbau im Bodenbereich oder im Heckklappenbereich mit Aluminium und darunter liegender Wabenkonstruktion aus Kunststoffen die entsprechend belasteten Flächenbereiche einfach zusammenbrechen und unschöne und auch gefährliche Löcher in der Innenseite des entsprechenden Aufbauelements herbeiführen.

Aufgabe der Erfindung ist es daher, eine Möglichkeit aufzuzeigen, den Anforderungen in irgendeiner Form besser gewachsene Aufbauten für Transportfahrzeuges für Reittiere, insbesondere Pferde, vorzuschlagen.

Diese Aufgabe wird bei einem gattungsgemäßen Transportfahrzeug mittels der Erfindung dadurch gelöst, dass die Bodenplatte und/oder die Heckklappe einen Schichtaufbau aufweisen, und dass das Kernmaterial der Bodenplatte beziehungsweise der Heckklappe ein mit dreidimensionalen Glasbrücken versehener Schaum aus Kunststoff ist.

Mit einem derartigen Gedankengang lässt sich das Problem sehr zuverlässig und zugleich wirtschaftlich lösen.

Die Zusammensetzung des Kernmaterials dient als Stabilisator. Das Kernmaterial besitzt zwei entscheidende Eigenschaften. Zum einen lässt sein chemischer Aufbau keine Feuchtigkeitsaufnahme zu und zum anderen ist seine physikalische Struktur so, dass keine Kapillarwirkung eintreten kann.

Besonders bevorzugt ist es dabei, wenn das Kernmaterial einen Schaum aus Polyurethan, Polyethylen, Polypropylen, Polyvinylchlorid, Polyethylenterephthalat und/oder Polycyanurat aufweist, abgekürzt üblicherweise als PU, PE, PP, PVC und PET.

Die Flächenstabilität wird damit sehr hoch und übertrifft diejenige der bisher üblichen Schichtholzplatten, während sie deutlich deren Gewicht unterschreitet.

Ferner ist es bevorzugt, wenn die Bodenplatte und/oder die Heckklappe auf beiden Seiten des Kernmaterials mit einem Glasfaserlaminat, beispielsweise mit ein oder mehreren Lagen aus einem Glasgelege beschichtet ist.

Besonders bevorzugt ist es dann, wenn auf der nach außen gerichteten Fläche der Bodenplatte und/oder der Heckklappe ein Gelcoat aufgebracht ist.

Durch diese neuartige Gesamtkombination entsteht ein vollständig geschlossenes System, bei dem das Kernmaterial eine dauerhaft feste und auch belastbare Verbindung mit den benachbarten Schichten eingeht.

Die Wirtschaftlichkeit der Transportfahrzeuge wird durch die gesteigerte Wertstabilität deutlich erhöht. Durch die geringere Neigung zu Zersetzung- und Verrottungsprozessen tritt nicht die gefürchtete gefährliche Beeinträchtigung der Verschraubungen mit dem Chassis ein. Witterungsbedingte Verformungen und deutliche Risse in den Wandsegmenten können vermieden werden, so dass darüber hinaus eine deutliche Erhöhung der Betriebssicherheit über den gesamten Lebenszyklus der Transportfahrzeuge eintritt. Die Schraubverbindungen zum Chassis sind dauerhaft gesichert. Die innere Struktur der Heckklappe und der Bodenplatte sind feuchtigkeitsfrei und verrottungsfrei.

Die äußerste Schicht aus Gelcoat ist fest und stabil, wie dies bei Fahrzeugaußenlacken gewünscht ist, und ist darüber hinaus in einer Vielzahl von Farben ausführbar.

Die Stabilität ist deutlich höher, als dies in den bekannten Konzeptionen der Fall ist. Es liegt an der neuartigen Zusammensetzung der Kernmaterialien der Heckplatte und der Bodenplatte.

Besonders bevorzugt ist vorgesehen, auch für die Seitenwände einen speziellen Aufbau zu verwenden, der sich dadurch auszeichnet, dass die Seitenwände ein geschäumtes Kernmaterial aufweisen.

Besonders bevorzugt ist dabei vorgesehen, dass das Kernmaterial aus Polyethylenterephthalatschaum (PET) oder Polyvinylchloridschaum (PVC) besteht.

Wenn das Kernmaterial aus Polyethylenterephthalatschaum besteht, so ist dieser holzfrei, nimmt keine Feuchtigkeit auf, besitzt keine Kapillarwirkung und kann eine vollflächige Verbindung zeigen.

Dabei wird er insbesondere mit Klebeharz verklebt.

Auch dieses spezielle Kernmaterial vereinigt die zwei entscheidenden Eigenschaften. Sein chemischer Aufbau lässt keine Feuchtigkeitsaufnahme zu und seine physikalische Struktur verursacht keine Kapillarwirkung. Zudem erreicht dieses Kernmaterial die Flächenstabilität der auch bei den Seitenwänden bisher üblichen Schichtholzplatten und unterschreitet deutlich deren Gewicht. Das System ist vollständig geschlossen und das Kernmaterial geht eine dauerhaft feste und belastbare Verbindung mit den benachbarten Polyesterflächen ein.

Weitere bevorzugte Merkmale und Vorteile sind in den Unteransprüchen sowie in der folgenden Beschreibung der Figuren mit einer bevorzugten Ausführungsform aufgenommen.

Im Folgenden wird anhand der Zeichnung ein Ausführungsbeispiel der Erfindung näher beschrieben.

Es zeigen:
- **Figur 1**: eine perspektivische Darstellung einer erfindungsgemäßen Ausführungsform eines Transportfahrzeugs für Reittiere, insbesondere Pferde, in rein schematischer Darstellung;
- **Figur 2**: eine schematische Schnittansicht einer Seitenwand des Transportfahrzeugs aus Figur 1;
- **Figur 3**: eine schematische Schnittansicht einer Heckklappe eines Transportfahrzeugs nach Figur 1; und
- **Figur 4**: eine schematische Schnittansicht einer Bodenplatte eines Transportfahrzeugs nach Figur 1.

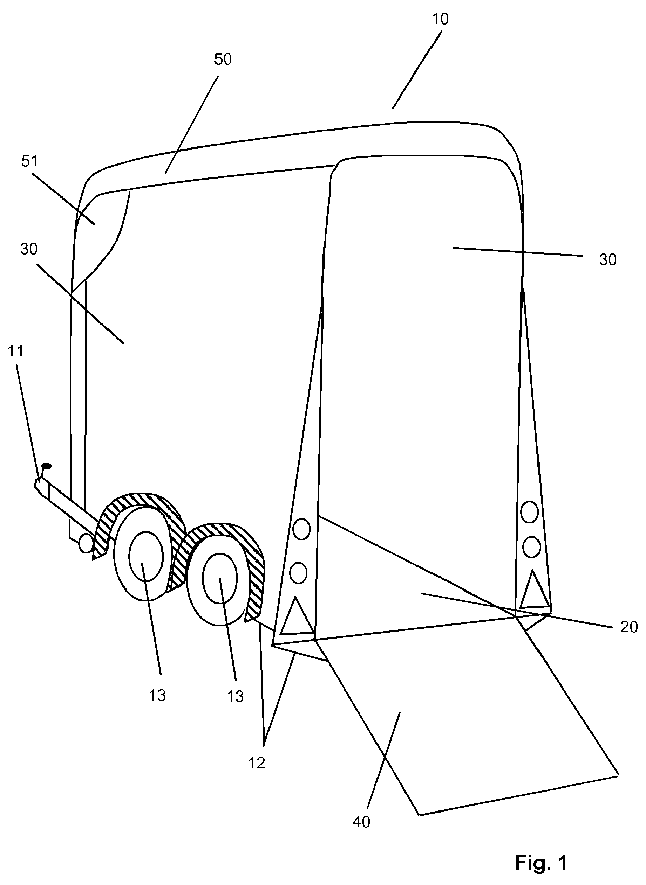

Ein Transportfahrzeug 10 für Reittiere, insbesondere Pferde, wird auch als Pferdeanhänger bezeichnet und ist in einer schematischen perspektivischen Gesamtansicht in der **Figur 1** dargestellt. Er ist mit Möglichkeiten zum Ankuppeln des Transportfahrzeugs 10 an ein nicht dargestelltes Zugfahrzeug ausgestattet, beispielsweise mit einer Anhängerkupplung 11. Das Transportfahrzeug 10 wird durch das Zugfahrzeug auf Straßen transportiert und dabei gezogen. Hierzu besitzt es ein Fahrgestell 12, an dem Räder 13 montiert sind.

Derartige Transportfahrzeuge 10 für Pferde beziehungsweise Pferdeanhänger oder Pferdetransporter sind meist für den Transport von ein oder zwei Pferden ausgelegt, wodurch sich die Größe des Fahrgestells 12 und die Zahl der Achsen mit den Rädern 13 und aufgrund von Erfahrungswerten des Gewichts eines Pferdes von beispielsweise 700 kg auch die Achslast ergibt.

Das Transportfahrzeug 10 beziehungsweise der Anhänger besitzt in dem vorderen, der Anhängerkupplung 11 benachbarten Bereich bevorzugt einen Stauraum, eine Sattelkammer oder einen ähnlichen Bereich.

Im hinteren, beziehungsweise rückwärtigen Bereich werden die Reittiere während des Transportes aufgestellt. Hierzu befindet sich auf dem Fahrgestell 12 eine Bodenplatte 20. Auf der Bodenplatte 20 liegt bevorzugt eine Gummimatte 25. Auf dieser Gummimatte 25 steht während des Transports das oder die Pferde. Die Punktbelastung, die durch die Pferdehufe auf jeweils relativ kleine Flächenbereiche der Bodenplatte 20 ausgeübt wird, ist recht hoch, wenn man die Masse des zu transportierenden Pferdes berücksichtigt.

Von der Bodenplatte 20 ragen Seitenwände 30 auf. Die Seitenwände 30 schützen das Reittier während des Transports vor äußeren Einflüssen wie Wind und Regen und natürlich insbesondere auch dem auftretenden Fahrtwind während des Transports und verhindern natürlich auch ein nicht beabsichtigtes Verlassen des Transportfahrzeugs während der Fahrt und natürlich auch in Ruhestellung.

Um das Reittier in den Innenraum des Transportfahrzeugs 10 auf die Gummimatte 25 auf der Bodenplatte 20 führen zu können, ist eine Heckklappe 40 vorgesehen. Diese Heckklappe 40 kann beispielsweise an der Hinterkante der Bodenplatte 20 schwenkbar angelenkt sein. Die Heckklappe 40 kann also zwei sehr unterschiedliche Funktionen und Positionen übernehmen. Im geschlossenen Zustand ragt sie ebenso wie die Seitenwände 30 von der Bodenplatte 20 senkrecht nach oben und umschließt dann mit den Seitenwänden 30 gemeinsam den Innenraum oberhalb der Bodenplatte 20 des Transportfahrzeugs 10.

Die Heckklappe 40 wird im geöffneten Zustand so gelegt, dass sie mit ihrer von der Bodenplatte 20 am weitesten entfernten Kante auf dem Erdboden, insbesondere dem Belag eines Hofes oder dem Straßenbelag aufliegt, sodass sie dann als Rampe für das Hereinführen des Reittiers in das Innere des Transportfahrzeugs 10 genutzt werden kann. Diese Doppelfunktion der Heckklappe 40 führt allerdings auch zu einer erheblichen Beanspruchung. Zum Einen tritt bei der Nutzung als Rampe nicht nur eine Belastung durch ein stehendes, sondern auch durch ein gehendes, trippelndes oder tänzelndes Reittier auf und zwar auch in den Endbereichen benachbart zu den Kanten der Heckklappe 40.

Zum Zweiten ist gerade eine Heckklappe 40 eines Transportfahrzeugs 10 für Reittiere im geschlossenen Zustand auch dem Ausschlagen der transportierten Reittiere, insbesondere Pferde ausgesetzt. Die Hufe des Pferdes treffen dabei mit ganz erheblichen Kräften auf einen relativ kleinen Flächenbereich der Heckklappe 40. Bei herkömmlichen Pferdeanhängern kommt es hier sehr häufig zu Beschädigungen bis hin zu Zerstörungen der Heckklappe 40.

Die Seitenwände 30 gehen nach oben zur Stabilisierung in ein Dachelement 50 über. Hier können Sichtfenster 51 oder Panoramafenster vorgesehen sein.

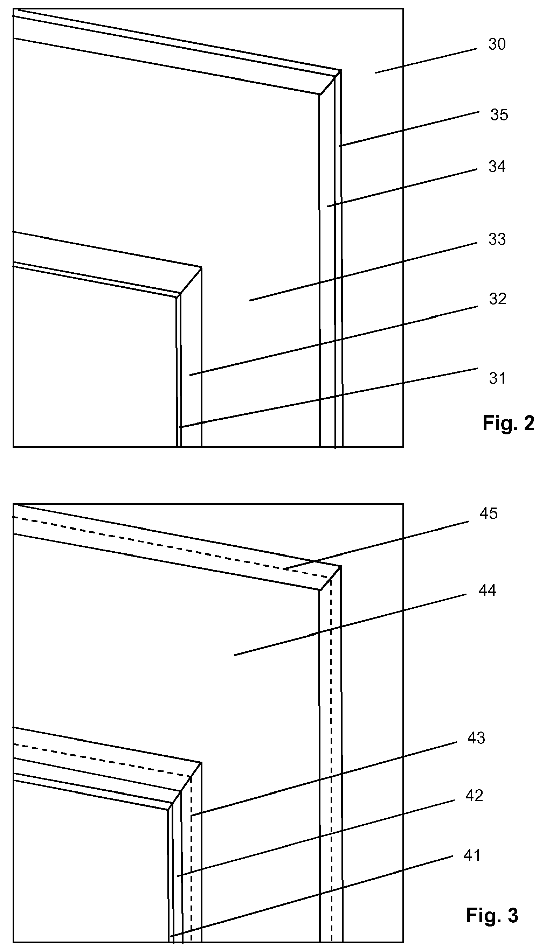

In der **Figur 2** sieht man einen Schnitt durch eine Seitenwand 30 des Transportfahrzeuges 10. Von der Außenseite des Transportfahrzeuges 10 nach innen folgen aufeinander folgende Schichten der Seitenwand 30:

Zunächst ein Gelcoat 31, daran anschließend ein Glasfaserlaminat 32, beispielsweise ein Faserspritzlaminat, dann ein Kernmaterial 33, welches in der dargestellten Ausführungsform aus Polyethylenterephthalatschaum besteht, also sogenanntem PET-Schaum. Anstelle von PET-Schaum kommen insbesondere auch PVC-Schaum, PP-Schaum und PU-Schaum in Betracht.

Auf das Kernmaterial 33 folgt eine weitere Schicht mit einem Glasfaserlaminat 24, beispielsweise Faserspritzlaminat, und dann beispielsweise eine Schicht aus einem Topcoat 35.

Das Kernmaterial 33 hat den großen Vorzug, insbesondere holzfrei zu sein, so dass keine Feuchtigkeitsaufnahme entsteht und aufgrund der fehlenden Kapillarwirkung des eingesetzten Schaums, beispielsweise des Polyethylenterephthalatschaums auch keine Feuchtigkeit weiterleiten kann. Es entsteht darüber hinaus eine vollflächige Verbindung.

Das Kernmaterial 33 wird als Stabilisator in die Seitenflächen beziehungsweise Seitenwände 30 eingesetzt. Der eingesetzte Schaum, beispielsweise also der Polyethylenterephthalatschaum vereinigt zwei entscheidende Eigenschaften. Sein chemischer Aufbau lässt keine Feuchtigkeitsaufnahme zu und seine physikalische Struktur verursacht keine Kapillarwirkung. Das bedeutet, dass auch bei Schraubverbindungen, die etwa durch die Seitenwände 30 geführt sind, um dort zum Beispiel Festhalteelemente zu befestigen oder auch verschiedene Seitenwände 30 miteinander zu verbinden, keine Feuchtigkeit in das Innere durch Materialritzen oder nicht vollständig geschlossene Sandwichsysteme eindringen kann.

Die Flächenstabilität von herkömmlichen Schichtholzplatten wird durch das Gesamtsystems der neuen Seitenwände 30 erreicht und deren Gewicht sogar deutlich unterschritten. Das System ist vollständig geschlossen und das Kernmaterial 33 geht eine dauerhaft feste und belastbare Verbindung mit den Polyesterflächen im Anschluss ein.

In der **Figur 3** sieht man einen Schnitt durch die Heckklappe 40 des Transportfahrzeuges 10.

Von außen nach innen folgt hier zunächst eine Schicht Gelcoat 41, darauf folgend ein Glasfaserlaminat 43. Dieses kann ein bis zwei Lagen eines Glasvlieses, dann zwei Lagen Glasgelege aufweisen. Darauf folgt ein Kernmaterial 44. Das Kernmaterial 44 besteht hier aus einem ultraleichten Schaum aus in Kombination mit dreidimensionalen Glasverstärkungen. Es handelt sich also um ein hybrides Kernmaterial 44 mit individualisierbaren mechanischen Eigenschaften und äußerst geringem Gewicht. Der ultraleichte Schaum kann insbesondere Polyurethan, Polyethylen und/oder Polycyanurat sein.

Angeboten werden derartige Kernmaterialien 44 mit dreidimensionalen Glasbrücken beispielsweise von der Saertex GmbH & Co KG unter der Marke Saerfoam.

Auf das Kernmaterial 44 folgt als nächste Schicht wiederum zwei Lagen Glasgelege 45.

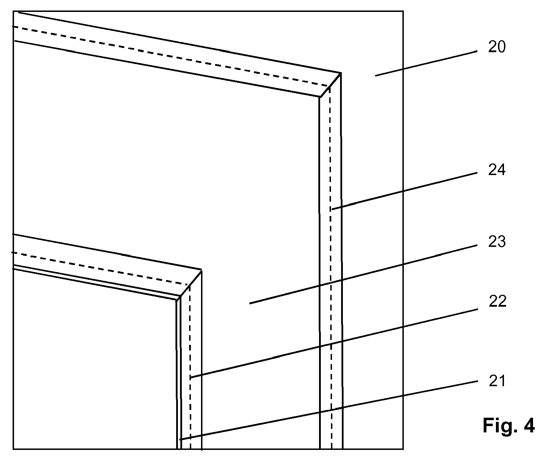

In der **Figur 4** ist ein Schnitt durch die Bodenplatte 20 des Transportsfahrzeugs 10 aus der Figur 1 dargestellt.

Man sieht hier von unten nach oben, also wiederum von außen nach innen, wenn man das gesamte Transportfahrzeug 10 betrachtet, zunächst einen Gelcoat 21, gefolgt von einem Glasfaserlaminat 22 und einem Kernmaterial 23. Das Glasfaserlaminat 22 kann beispielsweise zwei Lagen Glasgelege aufweisen. Das Kernmaterial 23 besteht wiederum aus einem Schaum mit dreidimensionalen Glasverstärkungen. Auch hier handelt es sich also um ein hybrides Kernmaterial 23 mit individualisierbaren mechanischen Eigenschaften und äußerst geringem Gewicht. Der Schaum kann insbesondere Polyurethan und/oder Polyethylen und/oder Polycyanurat enthalten.

Es folgt dann als nächste Schicht wiederum zwei Lagen Glasgelege 24.

Auf das Glasgelege 24 folgt dann wie bereits erwähnt eine Gummimatte 25, auf der dann die Pferde oder sonstigen Reittiere stehen.

### Bezugszeichenliste

- 10: Transportfahrzeug
- 11: Anhängerkupplung
- 12: Fahrgestell
- 13: Räder

- 20: Bodenplatte
- 21: Gelcoat der Bodenplatte 20
- 22: Glasgelege
- 23: Kernmaterial der Bodenplatte 20
- 24: Glasgelege
- 25: Gummimatte

- 30: Seitenwand
- 31: Gelcoat der Seitenwand
- 32: Glasfaserlaminat Faserspritzlaminat
- 33: Kernmaterial der Seitenwand 30
- 34: Glasfaserlaminat Faserspritzlaminat
- 35: Topcoat

- 40: Heckklappe
- 41: Gelcoat der Heckklappe
- 42: Glasfaserlaminat, beispielsweise Glasvlies
- 43: Glasfaserlaminat, beispielsweise Glasgelege
- 44: Kernmaterial der Heckklappe 40
- 45: Glasfaserlaminat, beispielsweise Glasgelege

- 50: Dach
- 51: Fenster

## Patentansprüche

1. Transportfahrzeug für Reittiere, insbesondere für Pferde,
mit einem Fahrgestell (12) und mit einem Aufbau, der eine Bodenplatte (20), von der Bodenplatte (20) aufragende Seitenwände (30) und eine Heckklappe (40) aufweist,
wobei die Heckklappe (40) beweglich angebracht ist und zwischen einer geschlossenen Position, in der die Heckklappe (40) die Position einer hinteren Seitenwand übernimmt, und einer geöffneten Position schwenkbar ist, in der die Heckklappe (40) die Position einer Rampe übernimmt, über welche ein Reittier in und aus dem Transportfahrzeug geführt werden kann,
wobei die Bodenplatte (20), die Seitenwände (30) und die Heckklappe (40) jeweils aus Kunststoff aufgebaut sind,
**dadurch gekennzeichnet,**
**dass** die Bodenplatte (20) und/oder die Heckklappe (40) einen Schichtaufbau aufweisen, und
**dass** das Kernmaterial (23, 44) der Bodenplatte (20) beziehungsweise der Heckklappe (40) ein mit dreidimensionalen Glasbrücken versehener Schaum aus Kunststoff ist.

2. Transportfahrzeug nach Anspruch 1,
**dadurch gekennzeichnet,**
**dass** das Kernmaterial (23, 44) einen Schaum aus Polyurethan, Polyethylen, Polypropylen, Polyvinylchlorid, Polyethylenterephthalat und/oder Polycyanurat aufweist.

3. Transportfahrzeug nach Anspruch 1 oder 2,
**dadurch gekennzeichnet,**
**dass** die Bodenplatte (20) und/oder die Heckklappe (40) auf beiden Seiten des Kernmaterials (23, 44) mit einem Glasfaserlaminat, insbesondere mit ein oder mehreren Lagen aus einem Glasgelege (22, 24; 43, 45) beschichtet ist.

4. Transportfahrzeug nach einem der vorstehenden Ansprüche,
**dadurch gekennzeichnet,**
**dass** auf der nach außen gerichteten Fläche der Bodenplatte (20) und/oder der Heckklappe (40) ein Gelcoat (21, 41) aufgebracht ist.

5. Transportfahrzeug nach einem der vorstehenden Ansprüche,
**dadurch gekennzeichnet,**
**dass** die Seitenwände (30) ein Kernmaterial (33) aufweisen.

6. Transportfahrzeug nach Anspruch 5,
**dadurch gekennzeichnet,**
**dass** das Kernmaterial (33) aus Polyethylenterephthalat besteht.

7. Transportfahrzeug nach einem der Ansprüche 5 oder 6,
**dadurch gekennzeichnet,**
**dass** die Seitenwände (30) auf beiden Seiten des Kernmaterials (33) mit einem Faserspritzlaminat (32, 34) beschichtet sind.

8. Transportfahrzeug nach einem der Ansprüche 5 bis 7,
**dadurch gekennzeichnet,**
**dass** die Seitenwände (30) auf der nach außen gerichteten Seite mit einem Gelcoat (31) beschichtet sind.
